# EUROPÄISCHE PATENTANMELDUNG

(11) **EP 1 034 867 A1**
(43) Veröffentlichungstag der Anmeldung: **13.09.2000**
(21) Anmeldenummer: 00101948.8
(22) Anmeldetag: 01.02.2000
(51) Int. Cl.: B23D 29/00, B23D 15/14

(54) **Vorrichtung zum Durchschneiden von strangförmigem Gut**

(30) Priorität: 12.03.1999 DE 29904474 U
(71) Anmelder: connectool GmbH & Co., 32758 Detmold (DE)
(72) Erfinder: Wiebe, Ulrich, 32694 Dürentrop (DE); Thiele, Helmut, 59174 Kamen (DE)
(74) Vertreter: TER MEER STEINMEISTER & PARTNER GbR

(57) **Zusammenfassung**

Die Erfindung betrifft eine Vorrichtung zum Durchschneiden von strangförmigem Gut, mit einem Gegenlager (9, 10) zum Abstützen des strangförmigen Guts, einer auf das Gegenlager (9, 10) zu bewegebaren Schneideinrichtung (13, 15) zum Durchschneiden des strangförmigen Guts und einer explosionsbetriebenen Antriebseinrichtung (4, 7) zum Antrieb der Schneideinrichtung (13, 15).

## Beschreibung

Die Erfindung betrifft eine Vorrichtung zum Durchschneiden von strangförmigem Gut gemäß dem Schutzanspruch 1.

Es kommt vor, daß in bestimmten Gefahrensituationen strangförmiges Gut aus Sicherheitsgründen schnell durchtrennt werden muß. Bricht zum Beispiel infolge schwerer See bei einem Segelschiff der Mast, so müssen die Wanten schnell durchschnitten werden, um etwa ein Kentern des Segelschiffs zu verhindern. Das Durchschneiden der Wanten ist relativ kraftaufwendig, da diese häufig aus einer großen Anzahl miteinander verdrillter Stahldrähte bestehen. Herkömmliche Vorrichtungen zum Durchschneiden von Wanten, etwa Kabelschneider, müssen daher relativ groß ausgebildet sein und sind somit schwer und unhandlich. Sie sind andererseits mit beiden Händen zu betätigen, so daß sich eine mit dieser Aufgabe betraute Person an Bord eines Segelschiffs kaum noch sichern kann.

Der Erfindung liegt die Aufgabe zugrunde, eine Vorrichtung der genannten Art zur Verfügung zu stellen, die nur mit einer Hand betätigbar und in der Lage ist, strangförmiges Gut schnell zu durchschneiden.

Eine erfindungsgemäße Vorrichtung zum Durchschneiden von strangförmigem Gut zeichnet sich aus durch ein Gegenlager zum Abstützen des strangförmigen Guts, durch eine auf das Gegenlager zu bewegbare Schneideinrichtung zum Durchschneiden des strangförmigen Guts sowie durch eine explosionsbetriebene Antriebseinrichtung zum Antrieb der Schneideinrichtung.

Eine derartige Vorrichtung läßt sich relativ leicht und handlich ausbilden, so daß sie von einem Benutzer nur mit einer Hand betätigt zu werden braucht, was in einer Gefahrensituation die Sicherheit des Benutzers erhöht, da seine andere Hand frei ist und er sich mit dieser sichern kann. Durch die erfindungsgemäße Vorrichtung wird darüber hinaus Infolge der Verwendung der explosionsbetriebenen Antriebseinrichtung genügend Schneidkraft zur Verfügung gestellt, so daß auch stärkeres strangförmiges Gut mühelos durchschnitten werden kann, etwa aus Stahl bestehende Wanten bei Segelschiffen.

Nach einer vorteilhaften Weiterbildung der Erfindung ist das Gegenlager hakenförmig ausgebildet. Dadurch läßt sich das zu zerschneidende strangförmige Gut besser erfassen und im Schneidbereich der Vorrichtung positionieren. Der gesamte Schneidvorgang läßt sich daher erheblich verkürzen.

In weiterer Ausgestaltung der Erfindung kann das Gegenlager als gerade Stange ausgebildet sein, die an Ihrem freien Ende einen um wenigstens 90° zurückweisenden Lagerabschnitt aufweist. Vorzugsweise weist dieser Lagerabschnitt um mehr als 90° zurück, um ein sicheres Einfangen des zu zerschneidenden strangförmigen Guts zu gewährleisten. Je länger darüber hinaus die Stange ist, desto weniger weit braucht sich eine Person dem zu zerschneidenden Gut zu nähern, was dann von Vorteil ist, wenn das zu zerschneidende Gut ansonsten zu weit weg wäre.

Nach einer noch anderen Weiterbildung der Erfindung ist die Schneideinrichtung in Längsrichtung der Stange antreibbar, derart, daß sie gegen den zurückweisenden Lagerabschnitt der geraden Stange führbar ist. Daher ist es möglich, das strangförmige Gut auch an relativ entfernten Positionen zerschneiden zu können.

Dabei kann nach einer noch weiteren Ausgestaltung der Erfindung die Schneideinrichtung in oder an der Stange geführt sein, um auch bei starken Schnittkräften eine exakte Positionierung der Schneideinrichtung relativ zum Gegenlager zu gewährleisten.

Die Schneideinrichtung kann zum Beispiel in Form einer geraden Stange ausgebildet sein, die an ihrem freien Ende einen Schneidkopf trägt. Dabei können sich sowohl am Schneidkopf als auch am Lagerabschnitt je eine Schneidkante befinden, die aufeinander zu weisen, so daß infolge dieser beiden Schneidkanten ein leichteres Zerschneiden des strangförmigen Guts ermöglicht wird. Dabei können die beiden Schneidkanten direkt aufeinander zu laufen und aufeinander schlagen, oder aber auch aneinander vorbei laufen, Je nach Ausgestaltung. Die Bewegung des Schneidkopfs in Richtung zum Gegenlager wird dann durch einen geeigneten Anschlag der Schneideinrichtung blockiert.

Die Vorrichtung selbst kann zum Beispiel hohlzylinderförmig oder in Form einer Pistole ausgebildet sein. Sie läßt sich daher von nur einer Hand eines Benutzers halten und betätigen.

Dabei können Gegenlager und Schneideinrichtung aus dem vorderen stirnseitigen Bereich des Gehäuses austreten, also aus dem stirnseitigen Bereich des Hohlzylinders oder dem Lauf des pistolenartig ausgebildeten Gehäuses.

Erfindungsgemäß ist auch die explosionsbetriebene Antriebseinrichtung im Gehäuse untergebracht. Sie weist vorzugsweise eine zylinderförmige und sich in Längsrichtung des Gehäuses erstreckende Brennkammer auf, in der ein Kolben gleitend verschiebbar ist, welcher in Verbindung mit der Schneideinrichtung steht. Vorzugsweise kann die Kolbenstange schon die zur Schneideinrichtung gehörende gerade Stange sein, an deren freien Ende sich der Schneidkopf befindet, um eine unmittelbare Kraftübertragung bei möglichst geringen Verlusten zu ermöglichen.

In die Brennkammer der explosionsbetriebenen Antriebseinrichtung sind vorzugsweise Kartuschen einführbar, die nach Zündung für den nötigen Antriebsdruck in der Brennkammer sorgen. Wird eine der Kartuschen in der Brennkammer gezündet, so wird durch den dabei entstehenden Antriebsdruck der Kolben in Richtung zum Gegenlager bewegt und mit ihm der Schneidkopf.

Dabei sind mehrere Kartuschen an einem Gurt in Gurtlängsrichtung hintereinanderliegend befestigt, wobei pro Verwendung einer Kartusche ein Schneidvorgang ausführbar ist. Zum Einziehen jeweils einer der Kartuschen in die Brennkammer bzw. zum Transport des Kartuschengurts weist die erfindungsgemäße Vorrichtung einen Spanngriff auf, der zu diesem Zweck gezogen werden muß und dabei vorzugsweise auch eine Zündvorrichtung vorspannt, etwa einen Pistolenabzug, um zu einem späteren Zeitpunkt die in der Brennkammer befindliche Kartusche zünden zu können.

In noch weiterer Ausgestaltung der Erfindung dient der Spanngriff zum Einziehen einer Kartusche in die Brennkammer gleichzeitig auch dazu, die Brennkammer von Restgasen zu entleeren und den Kolben In seine hintere bzw. Ausgangsstellung zu bewegen. Schneidvorrichtung und Spanngriff bewegen sich also jeweils in derselben Richtung.

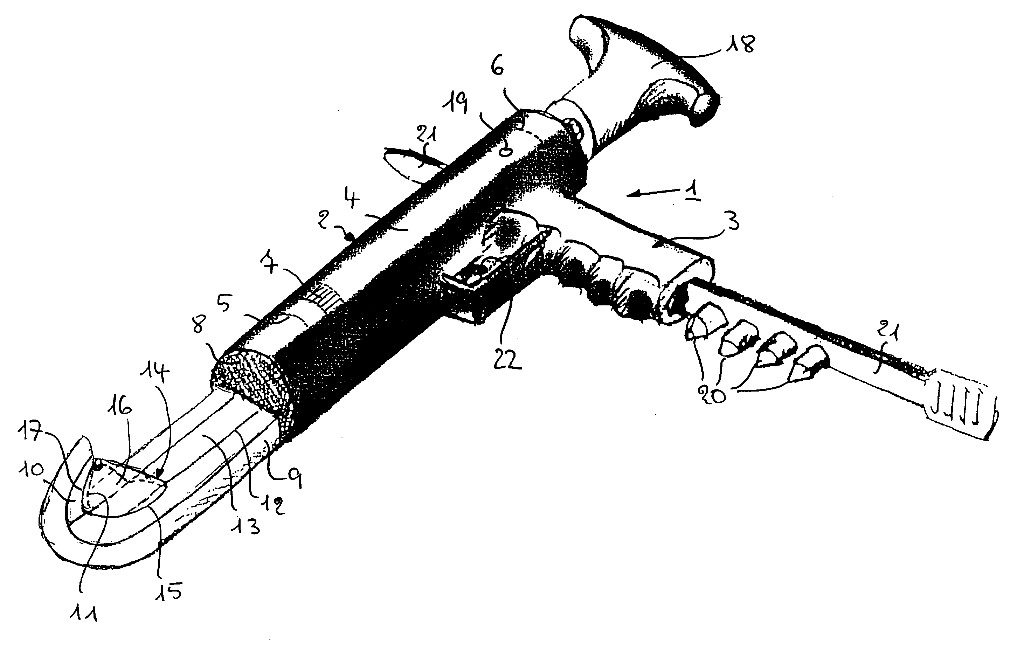

Anhand der einzigen Figur wird nachfolgend ein Ausführungsbeispiel der erfindungsgemäßen Vorrichtung näher beschrieben.

Die Vorrichtung weist zunächst ein Gehäuse 1 auf, das etwa pistolenförmig ausgebildet ist. Zum Gehäuse 1 gehören ein zylinderförmiges Gehäuseteil 2 mit einem daran einstückig angebrachten Handgriff 3. Im zylinderförmigen Gehäuseteil 2 befindet sich eine Brennkammer 4, die ebenfalls zylinderförmig ausgebildet ist und eine vordere Stirnwand 5 sowie eine hintere Rückwand 6 aufweist. Innerhalb der zylinderförmig ausgebildeten Brennkammer 4 ist ein Kolben 7 gleitend verschiebbar, der als Dichtkolben ausgebildet ist.

Aus der vorderen Stirnseite 8 des zylinderförmigen Gehäuseteils 2 tritt eine gerade Flachstange 9 aus, die als Gegenlager dient und an ihrem freien Ende einen in Richtung zum zylinderförmigen Gehäuseteil 2 zurückgebogenen Lagerabschnitt 10 aufweist. Der Lagerabschnitt 10 steht senkrecht zur Ebene der Flachstange 9 und bildet an einer Seite der Flachstange 9 eine Art Haken. Er ist um mehr als 90° gegenüber der Ebene der Flachstange 9 in Richtung zum zylinderförmigen Gehäuseteil 2 zurückgebogen. Dabei weist der Lagerabschnitt 10 an seiner zum Gehäuseteil 2 weisenden Seite eine Schneid- bzw. Messerkante 11 auf. Diese Schneid- bzw. Messerkante 11 steht in Breitenrichtung der Flachstange 9 gesehen senkrecht zu dieser und in Längsrichtung der Flachstange 9 gesehen unter einem spitzen Winkel zu dieser. Zwischen Schneid- bzw. Messerkante 11 und Flachstange 9 kann somit ein zu durchschneidendes strangförmiges Gut gelagert werden. Es ist der Übersicht wegen jedoch nicht eingezeichnet. Die Flachstange 9 selbst ist fest mit dem zylinderförmigen Gehäuseteil 2 verbunden. Ihre Längsrichtung erstreckt sich dabei parallel zur Längsrichtung des zylinderförmigen Gehäuseteils 2.

In der dem Lagerabschnitt 10 zugewandten Fläche der Flachstange 9 befindet sich eine Nut 12, die sich in Längsrichtung der Flachstange 9 erstreckt und zur Aufnahme einer geraden Stange 13 dient, deren Querschnitt dem Querschnitt der Nut 12 entspricht. Die gerade Stange 13 ist Teil einer Schneideinrichtung 14, zu der ein Schneidkopf 15 gehört, der am freien Ende der geraden Stange 13 fest angebracht ist, zum Beispiel einstückig mit der geraden Stange 13 verbunden ist. Der Schneidkopf 15 gleitet mit seiner unteren Fläche auf der Oberfläche der Flachstange 9 und weist eine senkrecht zur oberen Fläche der Flachstange 9 stehende Schneidfläche 16 auf, deren zum Lagerabschnitt 10 weisende Kante als Schneid- bzw. Messerkante 17 ausgebildet ist. Wird der Schneidkopf 15 in Richtung auf den Lagerabschnitt 10 bewegt, so wird ein vom Lagerabschnitt 10 gehaltenes strangförmiges Gut durch die Schneid- bzw. Messerkanten 11 und 17 zerschnitten.

Das dem Schneidkopf 15 abgewandte Ende der geraden Stange 13 ist durch die Stirnseite 8 des zylinderförmigen Gehäuseteils 2 passend hindurchgeführt, ragt durch die vordere Stirnwand 5 der Brennkammer 4 hindurch und ist schließlich mit dem Kolben 7 fest verbunden. Wird also im Bereich der Brennkammer 4 zwischen hinterer Stirnwand 6 und Kolben 7 ein Überdruck erzeugt, so wird über den Kolben 7 die gerade Stange 13 und mit ihr der Schneidkopf 15 in Richtung zum Gegenlager 10 angetrieben, um dadurch strangförmiges Gut zerschneiden zu können.

Am hinteren Ende des zylinderförmigen Gehäuseteils 2 ist ein Spanngriff 18 vorhanden. Dieser Spanngriff 18 steht in Wirkverbindung mit dem Kolben 7 und kann zum Beispiel über ein Gestänge mit diesem verbunden sein. Wird der Spanngriff 18 parallel zur Zylinderachse des zylinderförmigen Gehäuseteils 2 von diesem weg bewegt, so können Kolben 7 und gerade Stange 13 bzw. Schneidkopf 15 an dieser Bewegung teilnehmen, was dazu führt, daß sich die Brennkammer 4 verkleinert und sich der Schneidkopf 15 vom Gegenlager 10 entfernt. Wird danach ein Explosionsmittel in der nunmehr verkleinerten Brennkammer 4 gezündet, so bewegen sich Spanngriff 18, Kolben 7 und Schneidkopf 15 in Richtung zum Gegenlager 10, um dort eine Schneidwirkung zu erzielen. Die Bewegung des Schneidkopfs 15 in Richtung zum Gegenlager 10 kann nach Durchführung des Schneidvorgangs abgebremst werden, indem zum Beispiel der Kolben 7 gegen ein Dämpfungskissen oder anderen geeigneten Anschlag an der Seite der vorderen Stirnwand 5 schlägt. Mit der Bewegung des Spanngriffs 18 vom zylinderförmigen Gehäuseteil 2 weg läßt sich gleichzeitig verbrannter Explosivstoff mit Hilfe des Kolbens 7 aus der Brennkammer 4 über eine Ventilöffnung 19 herausdrücken.

Um den Kolben 7 innerhalb der Brennkammer 4 in Richtung zum Gegenlager 10 antreiben zu können, wird in die Brennkammer 4 im vorliegenden Ausführungsbeispiel eine Kartusche 20 eingeführt. Zu diesem Zweck befinden sich mehrere Kartuschen 20 an einem Gurt 21, der in Längsrichtung des Handgriffs 3 durch diesen von unten hindurchtransportiert wird. Der Transport des Gurts 21 durch den Handgriff 3 hindurch erfolgt dabei so, daß mit jedem Ziehen des Spanngriffs 18 eine weitere der Kartuschen 20 in die Brennkammer 4 gelangt. Gleichzeitig wird mit jedem Ziehen des Handgriffs 18 ein Zündmechanismus 22 vorgespannt, der in diesem Fall der Pistolenabzug ist. Wird der Pistolenabzug 22 betätigt, wird die in die Brennkammer 4 transportierte Kartusche 20 gezündet und bewirkt somit einen Vortrieb des Kolbens 7. Der Spanngriff 18 bewegt sich dabei in Richtung auf das zylinderförmige Gehäuseteil 2 zu. Danach kann der Spanngriff 18 erneut gezogen werden, um den Vorgang zu wiederholen.

Die Erfindung ist selbstverständlich nicht auf das vorliegende Ausführungsbeispiel beschränkt. So können Gegenlager und Schneideinrichtung auch in anderer Weise ausgebildet sein, etwa so, daß die Schneid- und Messerkanten 11, 17 in der Ebene der Flachstange 9 liegen. Auch braucht am Gegenlager 10 nicht unbedingt eine Schneid- bzw. Messerkante vorhanden zu sein. Andererseits ist der Handgriff 3 nicht unbedingt erforderlich. Das Gehäuse der Vorrichtung könnte auch nur aus einem zylinderförmigen Gehäuseteil 1 bestehen, wobei sich ein Auslöser für den Zündmechanismus zum Zünden der Kartuschen dann in der Oberfläche dieses Gehäuseteils befinden würde. Anstelle des Spanngriffs könnte auch eine seitlich am zylinderförmigen Gehäuseteil 2 vorhandene Spanneinrichtung vorhanden sein. Obwohl es vorteilhaft ist, bräuchten darüber hinaus die Kartuschen nicht an einem Gurt befestigt zu sein. Sie könnten auch einzeln von Hand In die Brennkammer eingesetzt werden. Ebenso bedürfte es nicht unbedingt der Spanneinrichtung, da der Kolben Innerhalb der Zylinderkammer nach Durchführung eines Schneidvorgangs ggf. automatisch zurückgestellt werden könnte, etwa durch ein Luftpolster oder eine Spannfeder.

## Patentansprüche

1. Vorrichtung zum Durchschneiden von strangförmigem Gut, mit:
- einem Gegenlager (9, 10) zum Abstützen des strangförmigen Guts;
- einer auf das Gegenlager (9, 10) zu bewegebaren Schneideinrichtung (13, 15) zum Durchschneiden des strangförmigen Guts; und
- einer explosionsbetriebenen Antriebseinrichtung (4, 7) zum Antrieb der Schneideinrichtung (13, 15).

2. Vorrichtung nach Anspruch 1, **dadurch gekennzeichnet,** daß das Gegenlager (9, 10) hakenförmig ausgebildet ist.

3. Vorrichtung nach Anspruch 2, **dadurch gekennzeichnet,** daß das Gegenlager (9, 10) als gerade Stange (9) ausgebildet ist, die an ihrem freien Ende einen um wenigstens 90° zurückweisenden Lagerabschnitt (10) aufweist.

4. Vorrichtung nach Anspruch 3, **dadurch gekennzeichnet,** daß die Schneideinrichtung (13, 15) in Längsrichtung der Stange (9) antreibbar ist.

5. Vorrichtung nach Anspruch 3 oder 4, **dadurch gekennzeichnet,** daß die Schneideinrichtung (13, 15) in oder an der Stange (9) geführt ist.

6. Vorrichtung nach einem der Ansprüche 1 bis 5, **dadurch gekennzeichnet,** daß die Schneideinrichtung(13, 15) eine gerade Stange (13) aufweist, die an ihrem freien Ende einen Schneidkopf (15) trägt.

7. Vorrichtung nach Anspruch 6, **dadurch gekennzeichnet,** daß sowohl am Schneidkopf (15) als auch am Lagerabschnitt (10)je eine Schneidkante (17, 11) vorhanden ist, die aufeinander zu weisen.

8. Vorrichtung nach einem der Ansprüche 1 bis 7, **dadurch gekennzeichnet,** daß das Gegenlager (9, 10) und die Schneideinrichtung (13, 15) aus einem vorderen Bereich (8) eines Gehäuses (2) der Vorrichtung austreten.

9. Vorrichtung nach Anspruch 8, **dadurch gekennzeichnet,** daß die explosionsbetriebene Antriebseinrichtung (4, 7) im Gehäuse (2) untergebracht ist.

10. Vorrichtung nach Anspruch 9, **dadurch gekennzeichnet,** daß die explosionsbetriebene Antriebseinrichtung (4, 7) eine zylinderförmige Brennkammer (4) aufweist, in der ein Kolben (7) verschiebbar ist, welcher in Verbindung mit der Schneideinrichtung (13, 15) steht.

11. Vorrichtung nach Anspruch 10, **dadurch gekennzeichnet,** daß in die Brennkammer (4) der explosionsbetriebenen Antriebseinrichtung (4, 7) Kartuschen (20) einführbar sind.

12. Vorrichtung nach Anspruch 11, **dadurch gekennzeichnet,** daß mehrere Kartuschen (20) an einem Gurt (21) befestigt sind und am Gehäuse (2) ein Spanngriff (18) zum Einziehen jeweils einer der Kartuschen (20) in die Brennkammer (4) angeordnet ist.

13. Vorrichtung nach Anspruch 12, **dadurch gekennzeichnet,** daß durch den Spanngriff (18) beim Einziehen einer Kartusche (20) in die Brennkammer (4) auch eine Zündvorrichtung (22) zum Zünden einer in die Brennkammer (4) eingezogenen Kartusche (20) vorspannbar ist.

14. Vorrichtung nach Anspruch 12, **dadurch gekennzeichnet,** daß durch den Spanngriff (18) beim Einziehen einer Kartusche (20) in die Brennkammer (4) letztere auch von Restgasen entleert und der Kolben (7) in seine hintere bzw. Ausgangsstellung zurückbewegt wird.

15. Vorrichtung nach einem der Ansprüche 1 bis 14, **dadurch gekennzeichnet**, daß sie die Form einer Pistole aufweist.
